# EUROPÄISCHE PATENTSCHRIFT

(11) **EP 3 168 036 B1**
(45) Veröffentlichungstag und Bekanntmachung des Hinweises auf die Patenterteilung: **11.08.2021**
(21) Anmeldenummer: 16001948.5
(22) Anmeldetag: 07.09.2016
(51) Int. Cl.: B29C 70/44

(54) **VERFAHREN UND VORRICHTUNG ZUR KONSOLIDIERUNG VON IMPRÄGNIERTEN FASERVERBUNDSTRUKTUREN**
METHOD AND DEVICE FOR CONSOLIDATING IMPREGNATED FIBER COMPOSITE STRUCTURES
PROCEDE ET DISPOSITIF DE CONSOLIDATION DE STRUCTURES COMPOSITES EN FIBRES IMPREGNEES

(30) Priorität: 11.11.2015 DE 102015014512
(43) Veröffentlichungstag der Anmeldung: 17.05.2017
(73) Patentinhaber: Fraunhofer-Gesellschaft zur Förderung der angewandten Forschung e.V., 80686 München (DE)
(72) Erfinder: Baumgärtner, Sebastian, D-72622 Nürtingen (DE); Henning, Frank, D-76327 Pfinztal (DE); Lohr, Christoph, D-76131 Karlsruhe (DE)
(74) Vertreter: Lichti - Patentanwälte Partnerschaft mbB

(56) Entgegenhaltungen:
- EP-A2- 1 293 271
- WO-A1-87/01651
- DE-A1-102014 004 053
- JP-A- H02 162 016
- US-A- 3 964 958
- US-B1- 6 231 796
- None

## Beschreibung

Die Erfindung betrifft ein Verfahren zur Konsolidierung von Faserverbundstrukturen mit wenigstens einem Matrixpolymer, indem
- die mit wenigstens einem thermoplastischen und/oder thermoelastischen Matrixpolymer zumindest teilweise imprägnierte Faserverbundstruktur zumindest bis in den Bereich der Plastifizierungstemperatur des Matrixpolymers erwärmt und unter Einwirkung von Druck verpresst wird; oder
- die mit wenigstens einem zu dem Matrixpolymer aushärtbaren Harz zumindest teilweise imprägnierte Faserverbundstruktur bis in den Bereich der Aushärtungstemperatur des Harzes erwärmt und unter Einwirkung von Druck verpresst wird,
wobei die zumindest teilweise imprägnierte Faserverbundstruktur anlässlich des Verpressens zumindest zeitweise mit einem von ihrem zentralen Bereich in Richtung ihrer Ränder abnehmenden Druckgradienten beaufschlagt wird. Die Erfindung bezieht sich ferner auf eine Vorrichtung zur Durchführung eines solchen Verfahrens, mit
- einem zur Aufnahme einer zumindest teilweise imprägnierten Faserverbundstruktur geeigneten Konsolidierungswerkzeug mit einer Unterlage und einer Abdeckung, zwischen welche die Faserverbundstruktur einbring- und ausbringbar ist, sowie mit wenigstens einem Umfangsauflager, welches im Umfangsbereich zwischen der Unterlage und der Abdeckung angeordnet ist;
- einem dem Konsolidierungswerkzeug zugeordneten Druckerzeuger, um eine in dem Zwischenraum zwischen der Unterlage und der Abdeckung angeordnete, zumindest teilweise imprägnierte Faserverbundstruktur mit Druck zu beaufschlagen; und
- einer dem Konsolidierungswerkzeug zugeordneten Heizeinrichtung.

Faserverbundstrukturen mit thermoplastischen und/oder thermoelastischen Matrixpolymeren oder auch mit duroplastischen oder elastomeren Matrixpolymeren der vorgenannten Art finden in Formteilen verschiedenster Art vielfältige Verwendung, wobei ihnen insbesondere ihr verhältnismäßig geringes Gewicht sowie die Möglichkeit zugute kommt, durch entsprechende Orientierung der Fasern dem Formteil eine erhöhte Festigkeit und Steifigkeit in Richtung der einwirkenden Lasten zu verleihen. So werden derartige Faserverbundstrukturen beispielsweise in Polymer-Formteilen in Form von Strukturbauteilen für die Fahrzeug-, Flugzeug- und Schiffsbauindustrie oder auch in Bauteilen für die Bauindustrie oder als Komponenten zur Energieerzeugung, wie beispielsweise Flügel für Windkraftanlagen, eingesetzt.

Die Herstellung derartiger Faserverbundstrukturen geschieht in der Regel dadurch, dass die Fasern der Faserverbundstruktur, welche insbesondere auch in Form von Bündeln, Geflechten, Geweben, Gestricken, Gelegen, Vliesen oder dergleichen vorliegen können, in geeigneten Formwerkzeugen imprägniert werden, wonach die imprägnierte Faserverbundstruktur unmittelbar oder in einem nachfolgenden Verfahrensschritt konsolidiert werden muss, indem sie unter Einwirkung von Druck und Temperatur verpresst wird. Die Fasern können dabei beispielsweise von Kohlenstoff- bzw. Carbonfasern (carbonfaserverstärkte Kunststoffe, CFK) oder Glasfasern (glasfaserverstärkte Kunststoffe, GFK), aber grundsätzlich auch von mineralischen oder natürlichen Fasern gebildet sein.

Handelt es sich bei den Matrixpolymeren um thermoplastische und/oder thermoelastische Polymere, so wird die Faserverbundstruktur beispielsweise mit dem thermoplastischen oder thermoelastischen Polymer im plastifizierten Zustand imprägniert, wobei letzteres anlässlich der Konsolidierung im plastifizierten Zustand gehalten bzw. in einen solchen überführt werden muss, damit es die Fasern möglichst vollständig benetzt. Liegt das thermoplastische und/oder thermoelastische Polymer dabei vornehmlich in einem teilkristallinen Zustand vor (wie z.B. Polypropylen (PP), Polyamid (PA) etc.), so entspricht die Plastifizierungstemperatur etwa seiner Schmelztemperatur; liegt das thermoplastische und/oder thermoelastische Polymer vornehmlich in einem amorphen Zustand vor (wie z.B. Polycarbonat (PC), Polymethylmethacrylat (PMMA) etc.), so entspricht die Plastifizierungstemperatur etwa seiner Erweichungstemperatur. Anschließend wird das Matrixpolymer unter Bildung der fertigen Polymermatrix unter Abkühlen desselben erstarrt.

Handelt es sich bei den Matrixpolymeren hingegen um duroplastische oder elastomere Polymere, so wird die Faserverbundstruktur z.B. mit einem zu einem solchen Matrixpolymer aushärtenden Harz in flüssiger oder gering viskoser Phase imprägniert, wonach das Imprägnierharz des derart gebildeten Halbzeugs unter Bildung der fertigen Polymermatrix ausgehärtet oder zumindest vorgehärtet bzw. vorvernetzt wird, indem die imprägnierte Faserverbundstruktur wiederum unter Einwirkung von Druck und Temperatur verpresst wird. Selbstverständlich können auf diese Weise ebenfalls thermoplastische und/oder thermoelastische Matrixpolymere erzeugt werden, wenn zu solchen aushärtbare Harzmischungen eingesetzt werden. Es sei an dieser Stelle erwähnt, dass mit "Harze" im Sinne der vorliegenden Offenbarung vornehmlich flüssige Mono-, Di- und/oder Oligomere angesprochen sind, welche mittels entsprechender Additive, wie Vernetzungsmitteln, Härtern, Katalysatoren und dergleichen, zur Reaktion zu dem Matrixpolymer befähigt sind.

Die Imprägnierung dient in beiden Fällen vornehmlich zu einer möglichst vollständigen Benetzung der Verstärkungsfasern mit dem plastifizierten (schmelzflüssigen bzw. erweichten) Matrixpolymer bzw. mit dem zu einem solchen aushärtbaren (flüssigen bzw. viskosen) Harz, wobei die Verstärkungsfasern - wie oben erwähnt - möglichst gänzlich imprägniert werden sollten, um die Bildung von Hohlräumen, welche zu einer lokal verminderten Festigkeit und Steifigkeit des fertigen Polymer-Formteils führen, zu verhindern. Hierbei soll die Konsolidierung vor allem der einschlussfreien Verbindung sowohl der Fasern mit den Matrixpolymeren bzw. mit den Harz(mischung)en als auch von Einzellagen der Faserverbundstruktur untereinander dienen. Die anlässlich der Konsolidierung eingestellte Temperatur sollte hinreichend hoch gehalten werden, um entweder die plastifizierbaren Matrixpolymere in die schmelzflüssige/erweichte Phase zu überführen bzw. im schmelzflüssigen/erweichten Zustand zu halten oder die Harze bzw. Harzmischungen zumindest auf ihre Aushärtungs- bzw. (Vor)vernetzungstemperatur zu bringen. Allerdings sollte die Temperatur auch nicht zu hoch eingestellt werden sollte, um insbesondere beim Einsatz plastifizierbarer Matrixpolymere einen Polymerabbau mit einer hiermit einhergehenden Kettenverkürzung des Polymers zu verhindern.

Darüber hinaus kann es von Vorteil sein, wenn die Faserverbundstruktur anlässlich ihrer Imprägnierung und/oder Konsolidierung mit einem Unterdruck beaufschlagt wird, welcher einen insbesondere oxidativen Polymerabbau der Polymermatrix zu verhindern vermag und überdies dazu führen kann, dass etwaige Lufteinschlüsse, Feuchtigkeit oder anderweitige Verunreinigungen, wie z.B. nicht vollständig polymerisierte Mono-, Di-, Oligomere, Ausgasungen der eingesetzten Materialien einschließlich der Fasern und dergleichen, abgezogen werden, so dass Gas- oder Flüssigkeitseinschlüsse der imprägnierten Faserverbundstruktur zuverlässig vermieden und eine einwandfreie Oberfläche erzielt werden kann.

Die Konsolidierung von imprägnierten Faserverbundstrukturen geschieht gegenwärtig beispielsweise mittels Heiztischen, wobei die imprägnierte Faserverbundstruktur unter konvektiver Erwärmung derselben zwischen zwei Heizplatten angeordnet und z.B. das thermoplastische oder thermoelastische Matrixpolymer plastifiziert wird, wonach die Faserverbundstruktur in einem in der Regel kälter temperierten Presswerkzeug verpresst wird. Als nachteilig haben sich einerseits die geringe Energieeffizienz sowie der mit dem separaten Presswerkzeug einhergehende hohe Investitionsaufwand erwiesen.

Entsprechendes gilt im Falle einer kontinuierlichen Imprägnierung/Konsolidierung in isochoren oder isobaren Doppelbandpressen, welche zudem hinsichtlich kleiner Losgrößen wenig flexibel sind und daher praktisch ausschließlich zur Serienfertigung zum Einsatz gelangen. So beschreibt die EP 0 347 936 A2 ein Verfahren zur kontinuierlichen Herstellung von Laminatschichten mit einer faserförmigen Basis und einem duroplastischen Matrixpolymer, wobei die Konsolidierung mittels Heißpressen unter Einsatz von Doppelbandpressen erfolgt, wie sie als solche beispielsweise auch aus der DE 296 22 385 U1 bekannt sind. Während grundsätzlich angestrebt wird, dass die Presse einen im Wesentlichen gleichmäßigen Druck über die gesamte Presszone der imprägnierten faserförmigen Basis ausüben soll, wird auch erwähnt, dass mittels der eingesetzten Doppelbandpresse ein Druckgradient auf die imprägnierte Faserbasis entgegen deren Förderrichtung ausgeübt werden kann, welcher einerseits für eine gute Imprägnierung durch Eindringen des flüssigen Matrixpolymers in bislang unbenetzte Bereiche der Faserbasis sorgt und andererseits in Hohlräumen der Faserbasis eingeschlossene Luft zu verdrängen vermag.

Entsprechendes gilt darüber hinaus auch weitgehend im Falle des Einsatzes sogenannter temperierbarer "Variotherm"-Werkzeuge, in welche die zuvor oder hierin imprägnierte Faserverbundstruktur eingelegt, erwärmt und zugleich verpresst wird. Überdies führt die Konsolidierung in derartigen Formwerkzeugen häufig zu relativ langen Belegungszeiten der Werkzeuge, was wiederum in langen Taktzeiten entsprechender Fertigungsprozesse resultiert. Zudem werden bei einer solchen Konsolidierung insbesondere etwaige, in der Faserverbundstruktur eingeschlossene Gase bzw. (Rest)feuchtigkeit nur unter hohem Druck komprimiert, ohne sie abführen zu können, was aus den oben genannten Gründen zu Fehlstellen und lokalen Schädigungen des Laminates, insbesondere dessen Imprägnierpolymers, führen kann. Der hohe Druck verursacht darüber hinaus häufig einen unerwünschten sogenannten Quetschfluss, was in unerwünschten Verlagerungen bzw. Relativverschiebungen der Fasern der Faserverbundstruktur und somit zu schlechteren mechanischen Eigenschaften resultiert.

Zur Verbesserung der Energieeffizienz wird in jüngerer Zeit zur Erwärmung der imprägnierten Faserverbundstruktur auch elektromagnetische Strahlung, vornehmlich im Mikrowellenspektrum, eingesetzt (WO 2011/073433 A1), wobei jedoch dafür Sorge zu tragen ist, dass der Einsatz von Mikrowellenenergie nicht zu einem erhöhten Polymerabbau des Matrixpolymers führt, weil die in der Regel inhomogene Aufheizung in lokalen Überhitzungen resultieren kann, so dass es zur Polymerschädigung bzw. zum thermischen Kettenbruch kommt.

Die GB 1 604 872 A beschreibt ein Verfahren zur Faserverstärkung von thermoplastischen Matrixpolymeren, wobei eine Faserverbundstruktur mit solchen Polymeren erzeugt und anschließend verpresst wird. Dabei kann vorgesehen sein, dass eine Lage Kunststoffmaterial auf eine Unterlage aufgelegt wird, wonach auf die Kunststofflage eine Lage aus Verstärkungsfasern aufgebracht wird. Sodann wird ein aushärtbares bzw. polymerisierbares Harz auf die Verstärkungsfasern aufgetragen und wird diese sandwichartige Anordnung mit einer folienartigen Kunststoffmembran abgedeckt. Schließlich wird der Zwischenraum zwischen der Membran und der Unterlage evakuiert, um die Verstärkungsfasern mit dem Harz zu imprägnieren, wonach das Harz polymerisiert wird. Zur Aushärtung des Harzes kann elektromagnetische Strahlung Anwendung finden, welche durch die Membran hindurch eingekoppelt werden kann, wobei insbesondere Strahlung im ultravioletten sowie im Infrarotbereich angeführt ist.

Der mittels einer solchen nachgiebig schlaffen, folienartigen Membran erzeugbare Druck erweist sich indes in aller Regel als zu gering, um Gas- und/oder Feuchtigkeitseinschlüsse in den Fasern und/oder in dem Matrixpolymer weitgehend vollständig zu entfernen, so dass es wiederum zu Einschlüssen in der fertig konsolidierten Faserstruktur kommen kann, welche mit einer Beeinträchtigung der Werkstoffeigenschaften, insbesondere mit einem Verlust an Festigkeit, einhergeht. Entsprechendes gilt für ein ähnliches Verfahren zur Herstellung von thermoplastischen Faserverbundstrukturen gemäß der EP 0 893 235 A2, welche im Gegensatz zur oben erwähnten GB 1 604 872 A eine konvektive Erwärmung der imprägnierten Faserverbundstruktur vorsieht.

Aus der WO 2005/095091 A1 ist ein weiteres Verfahren zur gleichzeitigen Imprägnierung und Konsolidierung von thermoplastischen Faserverbundstrukturen bekannt, wobei die Faserverbundstruktur zwischen zwei Halbschalen eines Werkzeugs angeordnet und dort verpresst wird. Neben der Anordnung der mit der Faserverbundstruktur versehenen Halbschalen in einer Druckkammer ist hierzu unter anderem ein Anlegen von Vakuum in den zwischen den Halbschalen gebildeten Formraum vorgesehen.

Die DE 10 2014 004 053 A1 beschreibt schließlich ein gattungsgemäßes Verfahren zur Konsolidierung von thermoplastischen oder thermoelastischen Faserverbundstrukturen, wobei die mit dem Matrixpolymer imprägnierte Faserverbundstruktur anlässlich der Konsolidierung auf eine starre Unterlage aufgelegt und entweder mit einer folienartigen, nachgiebigen Abdeckung entsprechend dem oben erwähnten Stand der Technik oder mit einer weiteren starren Abdeckung abgedeckt wird. Im letztgenannten Fall wird zwischen der starren Unterlage und der starren Abdeckung eine nachgiebige Ringdichtung zwischengeordnet und wird der die Faserverbundstruktur aufnehmende Zwischenraum zwischen der Unterlage und der Abdeckung evakuiert, während die Faserverbundstruktur zugleich mittels elektromagnetischer Strahlung erwärmt wird. Infolge des Unterdrucks wird die Faserverbundstruktur im Wesentlichen mit Umgebungsdruck flächig verpresst, wobei die nachgiebige Ringdichtung für eine weitgehend freie Verlagerbarkeit der starren Abdeckung auf die starre Unterlage zu sorgt. Das bekannte Verfahren hat sich zwar zur Konsolidierung qualitativ hochwertiger imprägnierter Faserverbundstrukturen bewährt und erweist sich überdies aufgrund des geringen apparatetechnischen und energetischen Aufwandes als äußerst wirtschaftlich, doch besteht auch hier ein Verbesserungsbedarf hinsichtlich der zuverlässigen Vermeidung von (Rest)einschlüssen von Gasen, wie insbesondere Luft und Feuchtigkeit.

EP1293271A2 offenbart den Oberbegriff der Ansprüche 1 und 15.

Der Erfindung liegt daher die Aufgabe zugrunde, ein materialschonendes Verfahren zur Konsolidierung von Faserverbundstrukturen mit wenigstens einem Matrixpolymer der eingangs genannten Art sowie eine zur Durchführung desselben geeignete Vorrichtung auf einfache und kostengünstige Weise dahingehend weiterzubilden, dass unter Gewährleistung einer hohen Energieeffizienz und Prozesssicherheit die Gefahr eines Einschlusses von Gasen einschließlich Feuchtigkeit in der fertig konsolidierten Faserverbundstruktur weiter verringert und hierdurch bedingte Beeinträchtigungen der Werkstoffeigenschaften vermieden werden können.

In verfahrenstechnischer Hinsicht wird diese Aufgabe mit einem Verfahren gemäß Anspruch 1 gelöst.

In vorrichtungstechnischer Hinsicht sieht die Erfindung zur Lösung dieser Aufgabe eine zur Durchführung eines solchen Verfahrens geeignete Vorrichtung vor, die in dem Anspruch 15 definiert ist.

Die offenbarte Ausgestaltung sieht folglich vor, dass die zumindest teilweise imprägnierte Faserverbundstruktur anlässlich ihrer Konsolidierung zumindest zeitweise derart mit einem Druckgradienten beaufschlagt wird, dass der Druck von ihrem zentralen Bereich in Richtung ihrer Randbereiche abnimmt. Auf diese Weise können auch geringste Mengen an in der imprägnierte Faserverbundstruktur eingeschlossenen Gasen (wie z.B. Luft, Feuchtigkeit oder auch - sofern die Faserverbundstruktur mit einer Reaktionsharzmischung imprägniert worden ist - anlässlich der Aushärtungsreaktion erzeugte, flüchtige organische Komponenten und dergleichen) entweichen, indem solche Gase aufgrund des entsprechenden Druckgradienten, welcher sich in der imprägnierten Faserverbundstruktur einstellt, von innen nach außen abgeleitet werden. Dabei wird zuverlässig vermieden, dass die Gase in dem plastifizierten Matrixpolymer oder in dem zu einem solchen aushärtbaren flüssigen Harz in Lösung gehen und somit in der konsolidierten Faserverbundstruktur verbleiben, wie es bei einem gleichmäßigen hohen Druck über die gesamte Erstreckung der imprägnierten Faserverbundstruktur geschehen kann. Folglich lässt sich die fertig konsolidierte Faserverbundstruktur unter Vermeidung von etwaigen Gas- oder Flüssigkeitseinschlüssen auch mit einer einwandfreien, homogenen Oberfläche ausbilden.

Im Hinblick auf eine sehr einfache und kostengünstige Durchführbarkeit mit geringem apparatetechnischem Aufwand sieht das offenbarte Verfahren dabei vor, dass die zumindest teilweise imprägnierte Faserverbundstruktur zwischen einer Unterlage und einer Abdeckung angeordnet wird, von welchen die Unterlage und/oder die Abdeckung elastisch nachgiebig verformbar ist bzw. sind, wobei die Abdeckung zur Beaufschlagung der Faserverbundstruktur mit einem von ihrem zentralen Bereich in Richtung ihrer Ränder abnehmenden Druckgradienten in einem die Faserverbundstruktur umfangsseitig umgebenden Bereich unter einem Abstand von der Unterlage gehalten wird, welcher größergleich der Dicke der zumindest teilweise imprägnierten Faserverbundstruktur beträgt, und wobei die Abdeckung und die Unterlage derart gegeneinander angepresst werden, dass die Unterlage und/oder die Abdeckung unter elastischer Biegung gegen die Faserverbundstruktur angepresst wird bzw. werden. Auf diese Weise wird der Randbereich der zumindest teilweise imprägnierten Faserverbundstruktur mit einem geringeren Druck beaufschlagt als deren zentraler Bereich, weil die Biegung der elastisch nachgiebig verformbaren Abdeckung bzw. der Unterlage dort aufgrund dessen, dass die Abdeckung von der Unterlage in einem Abstand gehalten wird, welcher zumindest der Dicke der zumindest teilweise imprägnierten Faserverbundstruktur entspricht oder vorzugsweise demgegenüber zumindest geringfügig größer ist, geringer ist als die maximale Durchbiegung im zentralen Bereich der Faserverbundstruktur. Es können hierbei sowohl die Unterlage als auch die Abdeckung nachgiebig elastisch verformbar sein, wobei es in den meisten Fällen ausreicht, wenn eine der genannten Komponenten, z.B. die Unterlage, unter dem einwirkenden Pressdruck im Wesentlichen starr bzw. formbeständig ist, während die andere Komponente, z.B. die Abdeckung, auf elastische Biegung beansprucht wird.

Die erfindungsgemäße Ausgestaltung gibt dabei auch die Möglichkeit sowohl einer chargenweisen als auch einer kontinuierlichen bzw. semikontinuierlichen Prozessführung, indem beispielweise eine Mehrzahl an zumindest teilweise imprägnierten Faserverbundstrukturen hintereinander dem Konsolidierungswerkzeug zugeführt und konsolidiert werden, oder es wird eine mehr oder minder endlos gefertigte, zumindest teilweise imprägnierte Faserverbundstruktur dem Konsolidierungswerkzeug taktweise zugeführt und abschnittsweise konsolidiert.

Gemäß einer vorteilhaften Ausgestaltung kann dabei vorgesehen sein, dass die zumindest teilweise imprägnierte Faserverbundstruktur anlässlich des Verpressens, insbesondere im Wesentlichen zyklisch, druckentlastet wird, wonach sie jeweils wieder mit dem Druckgradienten beaufschlagt wird. Ein derart zyklisches, beispielsweise mit einem etwa sinusförmigen Verlauf über die Zeit, Aufbringen des Druckgradienten auf die imprägnierte Faserverbundstruktur vermag in vielen Fällen zu einer noch besseren bzw. schnelleren Entgasung der imprägnierten Faserverbundstruktur beizutragen, weil während der Phasen der Druckentlastung sichergestellt wird, dass etwaige Gasanteile, welche in dem plastifizierten Matrixpolymer oder in der Harzmischung drohen in Lösung zu gehen oder teilweise in Lösung gegangen sind, nicht gelöst oder wieder dispergiert werden, woraufhin sie anlässlich des nachfolgenden Aufbringen des Druckgradienten wieder nach außen abgeleitet werden können. Die zyklische Beaufschlagung der imprägnierten Faserverbundstruktur mit dem von innen nach außen abnehmenden Druckgradienten kann dabei beispielsweise über einen gewissen Zeitraum in periodischen Zyklen erfolgen, wobei der Druckgradient während der Druckentlastungen nicht notwendigerweise auf im Wesentlichen null eingestellt werden muss, sondern vorzugsweise auch während der Druckentlastungen ein solcher Druckgradient aufrechterhalten wird, dessen Betrag aber geringer ist als während der Druck- bzw. Pressphasen.

Gemäß einer Weiterbildung kann ferner vorgesehen sein, dass die zumindest teilweise imprägnierte Faserverbundstruktur ferner
- mit einem über ihre Flächenerstreckung im Wesentlichen konstanten Druck und/oder
- mit einem von ihrem zentralen Bereich in Richtung ihrer Ränder zunehmenden Druckgradienten beaufschlagt wird, was beispielsweise dann zweckmäßig sein kann, wenn der zur Konsolidierung erforderliche Druck während des Aufbringens des Druckgradienten an den Randbereichen der Faserstruktur nicht hinreichend ist. In vorteilhafter Ausgestaltung kann die zumindest teilweise imprägnierte Faserverbundstruktur dabei insbesondere anfänglich, beispielsweise mittels zyklischer Druckstöße, mit dem von ihrem zentralen Bereich in Richtung ihrer Ränder abnehmenden Druckgradienten beaufschlagt werden, um die hierin eingeschlossenen Gase abzuziehen, wobei nach der solchermaßen erfolgten Entfernung der eingeschlossenen Gase zur weiteren Konsolidierung ein im Wesentlicher konstanter Druck, wie es als solches aus dem Stand der Technik bekannt ist, oder auch ein umgekehrter Druckgradient mit einem vom zentralen Bereich der Faserverbundstruktur in Richtung ihrer Ränder zunehmenden Druckgradienten aufgebracht werden kann. Die Abdeckung und die Unterlage können vorzugsweise mittels wenigstens eines unter Druckbelastung im Wesentlichen starren, die zumindest teilweise imprägnierte Faserverbundstruktur umgebenden Umfangsauflagers auf Abstand gehalten werden, so dass im Rand- bzw. Umfangsbereich der Faserverbundstruktur sichergestellt wird, dass sich dort anlässlich der Konsolidierung zumindest zeitweise ein geringerer Anpressdruck einstellt als in deren zentralen Bereich, in welchem die nachgiebig elastisch verformbare Abdeckung und/oder Unterlage infolge des aufgebrachten Anpressdruckes stärker in Richtung der Faserverbundstruktur durchgebogen wird als in ihrem dem starren Umfangsauflager nahen Randbereich.

Das Konsolidierungswerkzeug einer erfindungsgemäßen Vorrichtung kann folglich sehr einfach aufgebaut sein, wobei es beispielsweise eine Unterlage und eine Abdeckung aufweist, welche im Wesentlichen plattenförmig ausgebildet sind und deren Innenkontur selbstverständlich an die Außenkontur der imprägnierten Faserverbundstruktur angepasst sein kann, wobei entweder sowohl die Unterlage als auch Abdeckung elastisch nachgiebig verformbar sind oder nur eine der genannten Komponenten, z.B. die Abdeckung, derartige Werkstoffeigenschaften aufweist, während die andere Komponente, z.B. die Unterlage, starr ausgebildet ist. Letzteres kann durch geeignete Wahl der Materialdicke eingestellt werden, wobei sowohl die Unterlage als auch die Abdeckung beispielsweise aus Metall oder aus druck- und temperaturfesten Kunststoffen, wie insbesondere faserverstärkten Polyetheretherketonen (PEEK) und dergleichen, gefertigt sein können. Ferner haben sich elastisch nachgiebig biegsame Werkstoffe auf der Basis von Quarzglas sowie insbesondere Glaskeramik bewährt, welche zusätzlich eine sehr geringe Wärmedehnung aufweisen. In jedem Fall ist das zwischen der Unterlage und der Abdeckung angeordnete und beispielsweise an einer der genannten Komponenten festgelegte Umfangsauflager unter der mit der Konsolidierung der Faserverbundstruktur einhergehenden Druckbelastung im Wesentlichen starr, wobei seine Höhe (senkrecht zur Erstreckungsrichtung von Unterlage und Abdeckung betrachtet) derart an die Dicke der imprägnierten Faserverbundstruktur angepasst werden kann, dass sie zumindest der Dicke der Faserverbundstruktur entspricht und vorzugsweise demgegenüber zumindest geringfügig größer ist.

Sofern die zumindest teilweise imprägnierte Faserverbundstruktur gemäß der oben erwähnten Weiterbildung zusätzlich
- insbesondere nach Aufbringen des von innen nach außen abnehmenden Druckgradienten - mit einem im Wesentlichen konstanten Druck oder mit einem umgekehrten Druckgradient beaufschlagt werden soll, kann ferner vorgesehen sein, dass die Abdeckung zur Beaufschlagung der zumindest teilweise imprägnierten Faserverbundstruktur
- mit einem über ihre Flächenerstreckung im Wesentlichen konstanten Druck und/oder
- mit einem von ihrem zentralen Bereich in Richtung ihrer Ränder zunehmenden Druckgradienten
ferner in einem die Faserverbundstruktur umfangsseitig umgebenden Bereich unter einem Abstand von der Unterlage gehalten wird, welcher
- etwa der Dicke der zumindest teilweise imprägnierten Faserverbundstruktur entspricht; und/oder
- kleiner der Dicke (D) der zumindest teilweise imprägnierten Faserverbundstruktur (1) beträgt, wobei die Abdeckung (3) und die Unterlage (2) derart gegeneinander angepresst werden, dass die Unterlage (2) und/oder die Abdeckung (3) unter elastischer Biegung gegen die Faserverbundstruktur (1) angepresst wird bzw. werden.

Dies kann beispielsweise dadurch geschehen, indem das unter Druckbelastung im Wesentlichen starre Umfangsauflager, mittels dessen die Abdeckung und die Unterlage auf Abstand gehalten werden, höhenverstellt und/oder durch ein anderes Umfangsauflager mit verschiedener Höhe ausgetauscht wird.

Wird die Höhe des unter Druckbelastung im Wesentlichen starren Umfangsauflagers dabei in etwa der Dicke der zumindest teilweise imprägnierten Faserverbundstruktur entsprechend oder auch demgegenüber in einem Maße geringer gewählt, dass die Höhe des Umfangauflagers etwa der Dicke der Faserverbundstruktur nach deren Verpressen unter hiermit einhergehender Kompression entspricht, so lässt sich hiermit ein etwa konstanter Anpressdruck über die Flächenerstreckung der zumindest teilweise imprägnierten Faserverbundstruktur erzielen, was freilich grundsätzlich auch dadurch möglich ist, indem die in der offenbarten

Weise (vor)konsolidierte Faserverbundstruktur an ein Konsolidierungswerkzeug gemäß dem Stand der Technik, wie der eingangs zitierten DE 10 2014 004 053 A1, überführt und dort (nach)konsolidiert wird. Wird die Höhe des Umfangsauflagers hinreichend kleiner als die Dicke der zumindest teilweise imprägnierten Faserverbundstruktur gewählt, so biegt sich die Abdeckung und/oder die Unterlage unter Abstützung an den Rändern der Faserverbundstruktur in deren zentralem Bereich von dieser fort, so dass in insbesondere der Umfangsbereich der Faserverbundstruktur mit einem höheren Druck beaufschlagt wird, welcher in Richtung deren zentralen Bereich abnimmt.

In vorrichtungstechnischer Hinsicht kann das unter der Druckbelastung, wie sie anlässlich des Konsolidierens auftritt, im Wesentlichen starre Umfangsauflager zu diesem Zweck mit Vorteil höhenverstellbar und/oder austauschbar sein. Eine Höhenverstellbarkeit des Umfangsauflagers kann dabei auf beliebige bekannte Weise gewährleistet sein, wie beispielweise durch eine zweiteilige Ausgestaltung des Umfangsauflagers mit einem gegen die Unterlage wirksamen Unterteil und einem gegen die Abdeckung wirksamen Oberteil, welche ineinander teleskopierbar, mittels Spindeln aufeinander zu und voneinander fort bewegbar sind oder dergleichen.

In weiterhin vorteilhafter Ausgestaltung kann vorgesehen sein, dass die Erstreckungsflächen der Unterlage und der Abdeckung größer gewählt werden als die Erstreckungsfläche der zwischen diese eingebrachten, zumindest teilweise imprägnierten Faserverbundstruktur, wobei die Abdeckung unter seitlichem Umfangsabstand von der Faserverbundstruktur, insbesondere mittels des Umfangsauflagers, unter dem Abstand größergleich der Dicke der zumindest teilweise imprägnierten Faserverbundstruktur (bzw. - sofern die Faserstruktur in der obigen Weise zusätzlich mit einem etwa konstanten Druck oder einem umgekehrten Druckgradienten beaufschlagt werden soll -"unter einem etwa der Dicke der Faserverbundstruktur entsprechenden oder demgegenüber kleineren Abstand) gehalten wird. Wird das unter Druckbelastung im Wesentlichen starre Umfangsauflager mit Abstand vom Außenumfang der imprägnierte Faserverbundstruktur angeordnet, so lassen sich auch die Randbereiche der zumindest teilweise imprägnierten Faserverbundstruktur mit einem zur Konsolidierung oft hinreichenden Druck beaufschlagen, welcher aufgrund Durchbiegung der nachgiebig elastisch verformbaren Abdeckung (und/oder Unterlage) gleichwohl kleiner ist als im Zentrum der Faserverbundstruktur. Ferner kann der auf die Faserverbundstruktur einwirkende Druckgradient sowie auch der maximale Druck (im Bereich der maximalen Biegung der angepressten Abdeckung und/oder Unterlage), wie bereits erwähnt, in einfacher Weise dadurch variiert werden, indem die Höhe des starren Umfangsauflager und/oder dessen Abstand zum Umfangsrand der imprägnierten Faserverbundstruktur bis hin zu einer Umkehr dieses Druckgradienten (von innen nach außen abnehmend bis von innen nach außen zunehmend) verändert wird, wobei beispielsweise höhenverstellbare Umfangsauflager und/oder verschiedene Umfangsauflager unterschiedlicher Form und Größe zum Einsatz gelangen können.

Wie eingangs erwähnt, erweist es sich hinsichtlich einer Entfernung eingeschlossener Gase aus der zumindest teilweise imprägnierten Faserverbundstruktur anlässlich deren Konsolidierung als günstig, wenn sie mit einem Unterdruck bzw. Vakuum beaufschlagt wird. Zu diesem Zweck kann in vorteilhafter Ausgestaltung vorgesehen sein, dass die Abdeckung umfangsseitig, insbesondere an dem Umfangsauflager, gegen die Unterlage abgedichtet und der die zumindest teilweise imprägnierte Faserverbundstruktur aufnehmende Zwischenraum zwischen der Unterlage und der Abdeckung evakuiert wird, um die Faserverbundstruktur unter elastischer Biegung der Unterlage und/oder der Abdeckung zu verpressen. Hierdurch wird die Abdeckung infolge Umgebungsdruck gegen die Unterlage "angesaugt" und kann aufgrund deren Durchbiegung die zumindest teilweise imprägnierte Faserverbundstruktur mit dem Druckgradienten beaufschlagt werden.

Der an die Faserverbundstruktur angelegte Unterdruck vermag dabei neben einer Absaugung der vormals in der Faserverbundstruktur eingeschlossenen Gase sowohl einen Polymerabbau als auch insbesondere etwaige Gas- oder Flüssigkeitseinschlüsse in der Faserverbundstruktur zuverlässig zu verhindern, wobei ferner das an die Faserverbundstruktur angelegte (Teil)vakuum für den zur materialschonenden Konsolidierung erforderlichen Anpressdruck genutzt werden kann. Das unter Druckbelastung im Wesentlichen starre Umfangsauflager eines Konsolidierungswerkzeugs kann zu diesem Zweck vorteilhafterweise mit Dichteinrichtungen, wie Ringdichtungen oder dergleichen, versehen sein, um die Abdeckung gegen die Unterlage abzudichten.

Alternativ oder insbesondere auch zusätzlich - sofern der durch die Evakuierung maximal erzeugbare Anpressdruckgradient sich als unzureichend erweisen sollte - kann beispielsweise vorgesehen sein, dass die zwischen der Unterlage und der hiergegen abgedichteten Abdeckung angeordnete, zumindest teilweise imprägnierte Faserverbundstruktur, insbesondere in einer Druckkammer, mit äußerem Fluiddruck beaufschlagt wird, um die Faserverbundstruktur unter elastischer Biegung der Unterlage und/oder der Abdeckung zu verpressen.

Selbstverständlich ist es grundsätzlich auch denkbar, dass die zwischen der Unterlage und der Abdeckung angeordnete, zumindest teilweise imprägnierte Faserverbundstruktur dadurch verpresst wird, indem die Abdeckung und die Unterlage mittels einer Presse aufeinander zu bewegt werden, wobei freilich wiederum sicherzustellen ist, dass die Abdeckung im Umfangsbereich der zumindest teilweise imprägnierten Faserverbundstruktur, insbesondere mittels des starren Umfangsauflagers, von der Unterlage auf einem zumindest der Dicke der zumindest teilweise imprägnierte Faserverbundstruktur entsprechenden Abstand gehalten wird, während die Wirkfläche des Presswerkzeugs geringer sein muss als der von dem starren Umfangsauflager umschlossene Bereich der nachgiebig elastisch verformbaren Abdeckung (und/oder Unterlage), um für die Druckgradienten während der Konsolidierung zu sorgen. Die elastisch nachgiebig verformbare Komponente, wie beispielsweise die Abdeckung, sollte hierbei unter Zwischenanordnung von Polsterlagen mit dem Presswerkzeug in Kontakt stehen, um eine Beschädigung bis hin zum Bruch zu vermeiden, wenn sie unter dem Pressdruck auf Biegung beansprucht wird.

Während die Erwärmung der zumindest teilweise imprägnierten Faserverbundstruktur anlässlich deren Konsolidierung grundsätzlich auf beliebige bekannte Weise stattfinden kann - so beispielsweise auch konvektiv mittels herkömmlicher Heizeinrichtungen - kann aus den eingangs genannten Gründen einer hohen Energieeffizienz mit Vorteil vorgesehen sein, dass die zumindest teilweise imprägnierte Faserverbundstruktur mittels elektromagnetischer Strahlung, insbesondere im Infrarot- oder im Mikrowellenspektrum, zumindest
- bis in den Bereich der Plastifizierungstemperatur des thermoplastischen und/oder thermoelastischen Matrixpolymers; oder
- bis in den Bereich der Aushärtungstemperatur des Harzes erwärmt wird.

Durch den Einsatz von elektromagnetischer Strahlung zur Erwärmung der zumindest teilweise imprägnierten Faserverbundstruktur bzw. zur Überführung oder Halten des thermoplastischen und/oder thermoelastischen Matrixpolymers in einem plastifizierten Zustand oder zur Überführung des zu dem Matrixpolymer aushärtbaren Harzes auf seine Aushärtungs- oder (Vor)vernetzungstemperatur wird insbesondere eine sehr energieeffiziente, direkte Aufheizung sichergestellt. Um der im Zusammenhang mit einer Erwärmung der Faserverbundstruktur mittels hochfrequenter elektromagnetischer Strahlung, wie im Mikrowellenspektrum, auftretenden Problematik der Gefahr von lokalen Überhitzungen anlässlich der Konsolidierung zu begegnen, kann die zumindest teilweise imprägnierte Faserverbundstruktur hierbei vorzugsweise mit elektromagnetischer Strahlung mit einer Wellenlänge zwischen etwa 10⁻³ m und etwa 10⁻⁷ m bestrahlt werden, wobei sich eine Bestrahlung der zumindest teilweise imprägnierten Faserverbundstruktur mit elektromagnetischer Strahlung mit einer Wellenlänge größer als die des für das menschliche Auge sichtbaren Lichtspektrums, insbesondere im Infrarotspektrum, als besonders vorteilhart erwiesen hat. Auf diese Weise ist die Strahlungserwärmung auch auf praktisch beliebige Matrixpolymere bzw. Harze sowie auf beliebige Fasermaterialien (einschließlich synthetischer oder natürlicher Fasern) mit üblicherweise höchst unterschiedlichen Absorptionseigenschaften für Mikrowellenstrahlung anwendbar.

Um die zumindest teilweise imprägnierte Faserverbundstruktur mittels elektromagnetischer Strahlung zu erwärmen, kann beispielsweise vorgesehen sein, dass sie
- auf einer für die zu ihrer Erwärmung eingesetzten elektromagnetischen Strahlung durchlässigen Unterlage angeordnet wird; und/oder
- unter einer für die zu ihrer Erwärmung eingesetzten elektromagnetischen Strahlung durchlässigen Abdeckung angeordnet wird,
wobei die zumindest teilweise imprägnierte Faserverbundstruktur anlässlich ihrer Erwärmung durch die Unterlage und/oder durch die Abdeckung hindurch von außen mit elektromagnetischer Strahlung bestrahlt wird. Dabei kann zur Erwärmung der Faserverbundstruktur beispielsweise auch vorgesehen sein, dass sie anlässlich ihrer Erwärmung unmittelbar auf einer als Unterlage dienenden Deckplatte einer elektromagnetischen Strahlungsquelle und/oder unmittelbar unter einer als Abdeckung dienenden Deckplatte einer elektromagnetischen Strahlungsquelle angeordnet wird.

Was die erfindungsgemäße Vorrichtung zur Durchführung eines solchen Verfahrens zur Konsolidierung von zumindest teilweise imprägnierten Faserverbundstrukturen betrifft, so kann folglich vorzugsweise vorgesehen sein, dass
- der Druckerzeuger eine mit dem Zwischenraum zwischen der der Unterlage und der Abdeckung des Konsolidierungswerkzeugs in Verbindung stehende Saugpumpe, eine das Konsolidierungswerkzeug aufnehmende Druckkammer oder eine mit der Unterlage und der Abdeckung zusammenwirkende Presse; und/oder
- die Heizeinrichtung eine elektromagnetische Strahlungsquelle, insbesondere in Form einer Infrarot- oder einer Mikrowellenstrahlungsquelle,
umfasst.

Das erfindungsgemäße Verfahren gibt einerseits die Möglichkeit, dass die Fasern der Faserverbundstruktur, welche im Übrigen - wie oben bereits erwähnt - beispielsweise in Form von Faserbündeln oder -konvoluten, Geflechten, Geweben, Gestricken, Gelegen, Vliesen oder dergleichen vorliegen können,
- mit dem wenigstens einen thermoplastischen und/oder thermoelastischen Matrixpolymer; oder
- mit der wenigstens einen zu dem Matrixpolymer aushärtbaren Harzmischung vorimprägniert werden und die (vor)imprägnierte Faserverbundstruktur sodann konsolidiert wird. Der Imprägniervorgang kann dabei beispielsweise in einem ersten Verfahrensschritt vonstatten gehen, beispielsweise durch herkömmliches Einspritzen des plastifizierten Imprägnierpolymers oder des flüssigen Harzes in ein mit den Faser(strukture)n befülltes Formwerkzeug, wonach die derart vorgefertigte, (vor)imprägnierte Faserverbundstruktur in einem zweiten Verfahrensschritt konsolidiert wird.

Alternativ gibt das erfindungsgemäße Verfahren insbesondere auch die Möglichkeit, dass die Fasern der Faserverbundstruktur
- mit dem wenigstens einen thermoplastischen und/oder thermoelastischen Matrixpolymer; oder
- mit der wenigstens einen zu dem Matrixpolymer aushärtbaren Harzmischung imprägniert und zugleich konsolidiert werden. Das Imprägnieren der Fasern der Faserverbundstruktur geschieht in diesen Fall folglich in einem einzigen Verfahrensschritt gemeinsam mit der Konsolidierung. Handelt es sich bei dem Imprägniermedium um flüssige oder gering viskose Reaktionsharze, so können diese beispielsweise direkt in das mit der Faserverbundstruktur bestückte Konsolidierungswerkzeug eingespritzt werden. Handelt es sich bei dem Imprägniermedium um thermoplastische und/oder thermoelastische Polymere, so können die Fasern der Faserverbundstruktur beispielsweise mit dem Polymer im festen oder gelösten Zustand versetzt werden, wonach die Faserverbundstruktur mit dem thermoplastischen und/oder thermoelastischen Polymer unter Plastifizieren desselben imprägniert und zugleich konsolidiert wird. Die Erzeugung einer solchen Faserverbundstruktur, deren Fasern noch nicht imprägniert worden sind und anschließend zugleich imprägniert und konsolidiert werden, kann beispielsweise dadurch geschehen, indem das wenigstens eine thermoplastische und/oder thermoelastische Polymer
- in Form von Schichten oder Lagen in, auf und/oder zwischen die Fasern der Faserverbundstruktur ein- bzw. aufgebracht wird;
- in Form von Fäden, Fadenbündeln, Geweben, Gestricken, Gewirken, Gelegen und/oder Vliesen in, auf und/oder zwischen die Fasern der Faserverbundstruktur ein- bzw. aufgebracht wird;
- in Granulat- oder Pulverform in, auf und/oder zwischen die Fasern der Faserverbundstruktur ein- bzw. aufgebracht wird; und/oder
- in einem Lösungsmittel gelöst wird, die Fasern der Faserverbundstruktur mit der Lösung getränkt und das Lösungsmittel ausgetrieben wird.

Eine solche Vorgehensweise stellt einen besonders schonenden Herstellungsweg einer Faserverbundstruktur mit thermoplastischen und/oder thermoelastischen Matrixpolymeren dar, weil das Matrixpolymer nur einmal aufgeschmolzen bzw. erweicht werden muss, und zwar anlässlich der Konsolidierung, die gleichzeitig mit der Imprägnierung in einem einzigen Schritt erfolgt.

Um der zumindest teilweise imprägnierte Faserverbundstruktur anlässlich der Konsolidierung eine gewünschte Oberflächenkontur oder -struktur zu verleihen, gibt das erfindungsgemäße Verfahren ferner die Möglichkeit, dass die Unterlage und/oder die Abdeckung mit einer zu der gewünschten Oberflächenform und/oder -struktur der Faserverbundstruktur komplementären Oberflächenkontur und/oder -struktur versehen wird.

In vorteilhafter Ausgestaltung kann ferner die Temperatur der zumindest teilweise imprägnierten Faserverbundstruktur während ihrer Erwärmung anlässlich der Konsolidierung gemessen werden, wobei insbesondere die zugeführte Wärmeenergie, wie z.B. die elektromagnetische Strahlungsenergie, in Abhängigkeit der gewünschten Temperatur der Faserverbundstruktur gesteuert werden kann. Die Temperatur der Faserverbundstruktur kann hierbei vorzugsweise berührungsfrei, wie z.B. mittels wenigstens eines Pyrometers, gemessen werden, welches zweckmäßigerweise mit einer Steuer- oder Regeleinheit wirkverbunden sein kann, um in Abhängigkeit der erfassten Temperatur die dem Konsolidierungswerkzeug zugeordneten Heizeinrichtung, z.B. die Intensität der von dieser emittierten elektromagnetischen Strahlung, zu steuern bzw. zu regeln.

Weitere Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Ansicht eines Verfahrens zur Konsolidierung von imprägnierten Faserverbundstrukturen nach dem Stand der Technik gemäß der eingangs zitierten DE 10 2014 004 053 A1;
- Fig. 2: eine schematische Ansicht einer Ausführungsform eines erfindungsgemäßen Verfahrens zur Konsolidierung von imprägnierten Faserverbundstrukturen vor dem Verpressen;
- Fig. 3: eine der Fig. 2 entsprechende schematische Ansicht des Konsolidierungsverfahrens zu Beginn des Verpressens;
- Fig. 4: eine den Fig. 2 und 3 entsprechende schematische Ansicht des Konsolidierungsverfahrens während des Verpressens unter Anwendung eines auf die imprägnierte Faserverbundstruktur einwirkenden Druckgradienten, welcher von deren zentralem Bereich in Richtung ihrer Randbereiche abnimmt; und
- Fig. 5: ein exemplarisches Schaubild eines in der Situation gemäß Fig. 4 auf die imprägnierte Faserverbundstruktur einwirkenden Druckgradienten über einen Abschnitt der Faserverbundstruktur von deren Zentrum (Z) bis zu deren Rand.

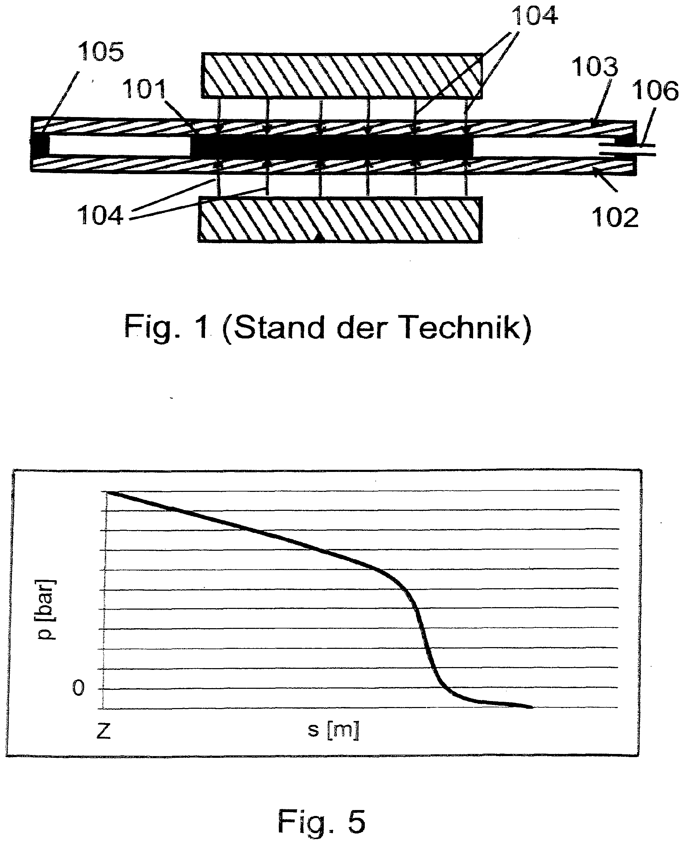

Wie der Fig. 1 in schematisierter Form zu entnehmen ist, wird gemäß dem Stand der Technik zur Konsolidierung einer mit - hier: thermoplastischen - Matrixpolymeren imprägnierten Faserverbundstruktur 101 diese auf einer formstabilen, starren Unterlage 102, z.B. aus Glas, Keramik oder dergleichen, angeordnet, wobei der Unterlage 102 eine nicht näher gezeigte Strahlungsquelle für elektromagnetische Strahlung 104, z.B. im Infrarotbereich, zugeordnet ist. Die Faserverbundstruktur 101 wird sodann mit einer gleichfalls formstabilen, starren Abdeckung 103, z.B. aus einem der Unterlage 102 entsprechenden druck- und wärmebeständigen Material, abgedeckt, wobei die starre Unterlage 102 und die starre Abdeckung 103 jeweils etwa plattenförmig ausgestaltet sind und die Faserverbundstruktur 101 in ihrem Zwischenraum zwischen sich aufnehmen. Die Unterlage 102 und die Abdeckung 103 sind ferner für die elektromagnetische Strahlung 104 durchlässig ausgebildet, so dass letztere durch die Unterlage 102 bzw. die Abdeckung 103 hindurch in die imprägnierte Faserverbundstruktur 101 eingekoppelt werden kann. Zur Abdichtung des die imprägnierte Faserverbundstruktur 101 aufnehmenden Zwischenraumes zwischen der starren Unterlage 102 und der starren Abdeckung 3b werden letztere mittels einer kompressiblen Ringdichtung 105 aus einem nachgiebigen Material, wie einem Elastomer, z.B. Silikon, Gummi oder dergleichen, gegeneinander abgedichtet.

Anlässlich der Konsolidierung wird die Faserverbundstruktur 101 durch die Unterlage 102 bzw. durch die Abdeckung 103 hindurch mit elektromagnetischer Strahlung 4 im Infrarotbereich bestrahlt, um das Matrixpolymer in einen plastifizierten, schmelzflüssigen Zustand zu überführen. Darüber hinaus wird der Zwischenraum zwischen der starren Unterlage 102 und der starren Abdeckung 103 mittels eines in den Zwischenraum einmündenden Rohrstutzens 106 evakuiert, so dass infolge des von oben auf die starre Abdeckung 103 oder auch zumindest bereichsweise von unten auf die Unterlage 102 einwirkenden Umgebungsdruckes die Faserverbundstruktur 101 unter Kompression der Ringdichtung 105 zwischen der starren Abdeckung 103 und der starren Unterlage 102 verpresst wird, welche infolge des inneren Unterdrucks parallel aufeinander zu bewegt werden. Hierbei besteht die Möglichkeit, die Erstreckungsflächen der Unterlage 102 und der Abdeckung 103 größer zu wählen als jene der zwischen diese eingebrachten imprägnierten Faserverbundstruktur 101, so dass die Ringdichtung 105 mit Abstand vom Außenumfang der imprägnierten Faserverbundstruktur 101 angeordnet ist. Auf diese Weise lässt sich beim Evakuieren des Zwischenraumes zwischen der starren Unterlage 102 und der starren Abdeckung 103 die imprägnierte Faserverbundstruktur 101 mit einem Anpressdruck größer dem Umgebungsdruck beaufschlagen.

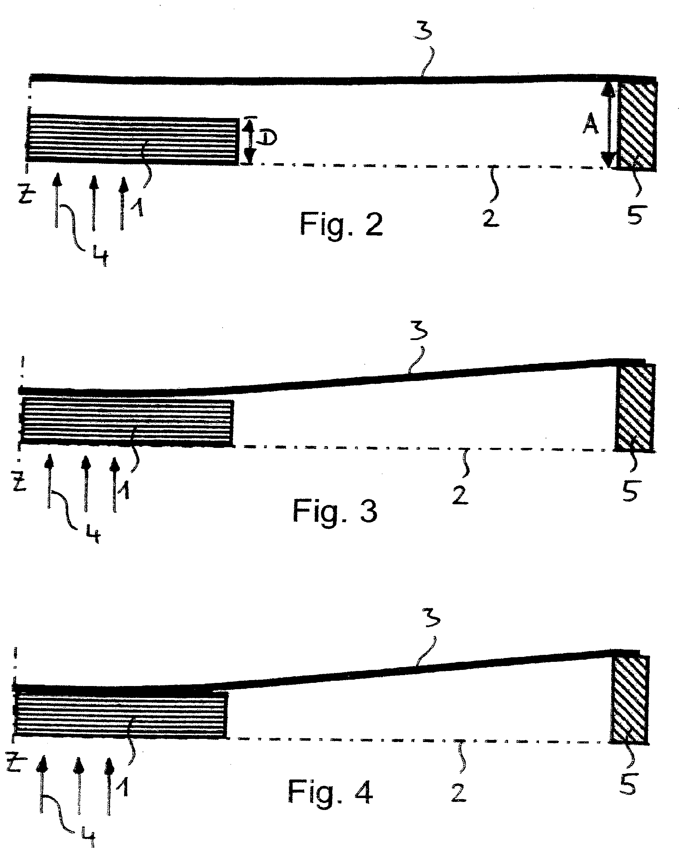

Um nun für eine möglichst vollständige Entgasung der imprägnierten Faserverbundstruktur zu sorgen, sind in den Fig. 2 bis 4 verschiedene Verfahrensstadien einer Ausführungsform eines erfindungsgemäßen Verfahrens zur Konsolidierung einer imprägnierten - sei es mit thermoplastischen und/oder thermoelastischen Matrixpolymeren oder sei es mit zu Matrixpolymeren aushärtbaren Flüssigharzmischungen - Faserverbundstruktur 1 in stark schematisierter Form wiedergegeben, wobei die imprägnierte Faserverbundstruktur 1 jeweils über einen Abschnitt dargestellt ist, welcher sich von ihrem Zentrum Z bis zu ihrem Außenumfang (in Fig. 2 bis 4 rechts) erstreckt.

Wie insbesondere aus Fig. 2 ersichtlich, wird die imprägnierte Faserverbundstruktur 1 wiederum auf einer strichpunktiert angedeuteten Unterlage 2 angeordnet, welche insbesondere Teil eines nicht näher gezeigten Konsolidierungswerkzeugs sein kann und im vorliegenden Fall beispielsweise formstabil bzw. starr ausgestaltet ist. Die Unterlage 2 ist dabei für elektromagnetische Strahlung 4, insbesondere Infrarotstrahlung, einer gleichfalls nicht näher dargestellten Strahlungsquelle einer dem Konsolidierungswerkzeug zugeordneten Heizeinrichtung durchlässig, um die imprägnierte Faserverbundstruktur 1 anlässlich deren Konsolidierung zu erwärmen und das Matrixpolymer in die schmelzflüssige Phase zu überführen bzw. die flüssige Harzmischung auf ihre Aushärtungstemperatur zu bringen. Auf die auf der Unterlage 2 befindliche imprägnierte Faserverbundstruktur 1 wird eine elastisch nachgiebig auf Biegung verformbare Abdeckung 3 (welche ebenfalls für die Strahlung 4 durchlässig sein kann, um die Faserverbundstruktur 1 von beiden Seite zu bestrahlen; nicht gezeigt) aufgebracht, welche in einem die Faserverbundstruktur 1 umfangsseitig umgebenden Bereich unter einem Abstand A von der Unterlage 1 gehalten wird, welcher größer ist als die Dicke D der Faserverbundstruktur 1, und beispielsweise aus einem elastisch biegsamen Material, wie aus Metall, faserverstärkten hochtemperatur- und druckfesten Kunststoffen, Glaskeramik oder dergleichen, gefertigt sein kann. Dies geschieht beim vorliegenden Ausführungsbeispiel mittels eines zwischen der Unterlage 2 und der elastisch nachgiebig verformbaren Abdeckung 3 angeordneten, unter Einwirkung des Konsolidierungsdruckes im Wesentlichen starren bzw. formstabilen und insbesondere in Normalrichtung zur Unterlage 2 bzw. zur Abdeckung 3 nicht nennenswert komprimierbaren (der Abstand A bleibt also etwa konstant) Umfangsauflagers 5, welches insbesondere mit Abstand vom Umfangsrand der imprägnierten Faserverbundstruktur 1 angeordnet wird, der im vorliegenden Fall beispielsweise etwa dem Durchmesser der Faserverbundstruktur 1 entspricht. Neben dem Auf-Abstand-Halten von Unterlage 2 und elastisch nachgiebig auf Biegung verformbarer Abdeckung 3 besitzt das Umfangsauflager 5 im vorliegenden Fall die Aufgabe, den Zwischenraum zwischen der Unterlage 2 und der Abdeckung 3 abzudichten, wozu das Umfangsauflager 5 an seinen der Unterlage 2 und der Abdeckung 3 zugewandten Seiten mit entsprechenden Dichtflächen versehen sein kann.

Wie aus Fig. 3 hervorgeht, wird zum Verpressen der imprägnierten Faserverbundstruktur 1 nun beispielsweise der Zwischenraum zwischen der Unterlage 2 und der Abdeckung, z.B. mittels einer nicht gezeigten Saugpumpe, evakuiert, so dass infolge des inneren Unterdruckes die elastisch nachgiebig verformbare Abdeckung 3 nach innen in Richtung der imprägnierten Faserverbundstruktur 1 gebogen wird und zunächst in deren zentralen Bereich zur Anlage kommt, da sie randseitig stets von dem Umfangsauflager unter dem Abstand A von der Unterlage 2 gehalten wird. Liegt der maximale Anpressdruck an bzw. ist in dem Zwischenraum zwischen der Unterlage 2 und der Abdeckung 3 der maximale Unterdruck erreicht worden, so ergibt sich die in der Fig. 4 schematisch wiedergegebene Situation, in welcher die imprägnierte Faserverbundstruktur 1 zwischen der Unterlage 2 und der elastisch nachgiebig in Richtung derselben gebogenen Abdeckung 3 verpresst wird. Hierbei stellt sich aufgrund dessen, dass die Durchbiegung der elastisch nachgiebig verformten Abdeckung 3 im zentralen Bereich Z der Faserverbundstruktur 1 größer ist als in deren Randbereichen, welche näher an dem Umfangsauflager 5 angeordnet sind wie ihr Zentrum Z, ein über die Fläche der imprägnierten Faserverbundstruktur 1 wirksamer Druckgradient, welcher von deren zentralem Bereich Z in Richtung ihrer Ränder abnimmt, so dass eingeschlossene Gase, wie Luft, Feuchtigkeit oder flüchtige Polymer- bzw. nicht umgesetzte Harzbestandteile vollständig aus der imprägnierten Faserverbundstruktur 1 von deren Inneren nach außen abgeführt werden, woraufhin sie aus dem Zwischenraum zwischen der Unterlage 1 und der Abdeckung 3 abgezogen werden.

Wird das Umfangsauflager 5 dabei vorzugsweise mit Abstand von dem Umfangsrand der imprägnierten Faserverbundstruktur 1 angeordnet, so ergibt sich einerseits auch in deren Randbereichen ein in der Regel zur Konsolidierung noch ausreichender Anpressdruck, welcher gleichwohl geringer ist als im zentralen Bereich Z der Faserverbundstruktur 1. Andererseits lässt sich mittels Evakuieren des Zwischenraumes zwischen der Unterlage 2 und der Abdeckung 3 die Faserverbundstruktur 1 zumindest in ihrem zentralen Bereich Z mit einem Anpressdruck größer dem herrschenden Umgebungsdruck beaufschlagen, wobei der gewünschte Anpressdruck entsprechend dem Verhältnis der Fläche der Abdeckung 3 (und/oder gegebenenfalls der Unterlage 2) zu der Fläche der Faserstruktur 1, welche mit der Unterlage 2 bzw. mit der Abdeckung 3 im Kontakt steht, eingestellt werden kann. Sofern ein (noch) höherer Anpressdruck für die Konsolidierung erwünscht ist, besteht selbstverständlich die Möglichkeit, z.B. das gesamte Konsolidierungswerkzeug 2, 3, 5 in einer Druckkammer anzuordnen oder der Unterlage 2 und der Abdeckung 3 ein Presswerkzeug zuzuordnen, wie es weiter oben beschrieben ist.

Die in den Fig. 2 bis 4 schematisch dargestellten Verfahrensschritte können insbesondere in einer im Wesentlichen zyklischen Abfolge wiederholt werden, wobei zwischen den Anpressvorgängen (Fig. 4) eine Druckentlastung (Fig. 2 bzw. 3) stattfindet. Dies kann beispielsweise durch eine periodische Belüftung des Zwischenraumes zwischen der Unterlage 2 und der hiergegen abgedichteten, nachgiebig elastisch verformbaren Abdeckung 3 geschehen, wobei vorzugsweise auch in den Druckentlastungsphasen ein Teilvakuum in dem Zwischenraum aufrechterhalten werden kann. Eine solche Vorgehensweise hat sich hinsichtlich eines vollständigen Ausgasens der imprägnierten Faserverbundstruktur 1 als besonders vorteilhaft erwiesen, indem die eingeschlossenen Gase aus der Faserverbundstruktur 1 heraus "gepumpt" werden und insbesondere eine Rücklösung solcher Gase im den schmelzflüssigen Matrixpolymeren oder in den (noch) flüssigen Harzen, wie sie bei konstant hohen Drücken auftreten kann, zuverlässig verhindert wird. Zudem wird auf diese Weise die plastifizierte Polymermatrix oder die flüssige/viskose Harzmischung in etwaige noch nicht benetzte Bereiche der Fasern der Faserverbundstruktur gepresst, in welchem Zusammenhang sich die zyklisch Druckbe- und -entlastung gleichfalls als vorteilhaft erweist. Darüber hinaus kann - insbesondere nach Beaufschlagung der imprägnierten Faserverbundstruktur mit dem Druckgradienten der vorgenannten Art, beispielsweise während des Abkühlens derselben - ein im Wesentlichen gleichmäßiger Druck oder auch ein umgekehrter Druckgradient an die Faserverbundstruktur 1 angelegt werden, was z.B. dadurch geschehen kann, indem das Umfangsauflager 5 gegen ein anderes mit demgegenüber geringerer Höhe (nicht gezeigt) ausgetauscht oder die Höhe des verstellbaren Umfangsauflagers 5 verringert wird (ebenfalls nicht gezeigt), wobei ferner auch der Unterdruck entsprechend verändert werden kann, um die imprägnierte Faserverbundstruktur 1 etwa planparallel (nach) zu verpressen.

Darüber hinaus besteht selbstverständlich die Möglichkeit, die Temperatur der imprägnierten Faserverbundstruktur 1 während ihrer Erwärmung anlässlich der Konsolidierung zu erfassen, was insbesondere berührungsfrei, beispielsweise mittels eines.oder mehrerer Pyrometer(s), geschehen kann. Auf diese Weise lässt sich die in die imprägnierte Faserverbundstruktur 1 eingekoppelte elektromagnetische Strahlungsenergie 4 in Abhängigkeit der gewünschten Temperatur steuern bzw. regeln, um eine Überhitzung insbesondere des Matrixpolymers zu vermeiden und beispielsweise für eine im Wesentlichen isotherme Konsolidierung im Bereich oder oberhalb der Schmelztemperatur des Matrixpolymers bzw. im Bereich oder oberhalb der Aushärtungstemperatur der zu auszuhärtenden Harzmischung zu sorgen.

In der Fig. 5 ist schließlich ein Schaubild eines in der Situation gemäß Fig. 4 auf die imprägnierte Faserverbundstruktur 1 einwirkenden Druckgradienten über einen Abschnitt der Faserverbundstruktur von deren Zentrum Z bis zu deren Rand gezeigt. Während auf der Abszisse der halbe Durchmesser der imprägnierten Faserverbundstruktur 1 von deren zentralem Bereich Z bis zu ihrem Außenumfang aufgetragen ist, ist auf der Ordinate die Flächenpressung aufgetragen, wie sie durch Evakuieren des Zwischenraumes zwischen der (hier: starren) Unterlage 2 und der elastisch nachgiebig auf Biegung verformten Abdeckung 3 erzeugt wird. Man erkennt ein Druckmaximum im Zentrum Z der imprägnierten Faserverbundstruktur 1, welches nach außen hin zunächst flach und sodann steiler abfällt, um eine praktisch vollständige Abfuhr eingeschlossener Gase vom Innern der imprägnierten Faserverbundstruktur 1 nach außen zu sorgen.

## Patentansprüche

1. Verfahren zur Konsolidierung von Faserverbundstrukturen (1) mit wenigstens einem Matrixpolymer, indem
- die mit wenigstens einem thermoplastischen und/oder thermoelastischen Matrixpolymer zumindest teilweise imprägnierte Faserverbundstruktur (1) zumindest bis in den Bereich der Plastifizierungstemperatur des Matrixpolymers erwärmt und unter Einwirkung von Druck verpresst wird; oder
- die mit wenigstens einem zu dem Matrixpolymer aushärtbaren Harz zumindest teilweise imprägnierte Faserverbundstruktur (1) bis in den Bereich der Aushärtungstemperatur des Harzes erwärmt und unter Einwirkung von Druck verpresst wird,
wobei die zumindest teilweise imprägnierte Faserverbundstruktur (1) anlässlich des Verpressens zumindest zeitweise mit einem von ihrem zentralen Bereich (Z) in Richtung ihrer Ränder abnehmenden Druckgradienten beaufschlagt wird, indem die zumindest teilweise imprägnierte Faserverbundstruktur (1) zwischen einer Unterlage (2) und einer Abdeckung (3) angeordnet wird, von welchen die Unterlage (2) und/oder die Abdeckung (3) elastisch nachgiebig verformbar ist bzw. sind, und die Abdeckung (3) und die Unterlage (2) derart gegeneinander angepresst werden, dass die Unterlage (2) und/oder die Abdeckung (3) unter elastischer Biegung gegen die Faserverbundstruktur (1) angepresst wird bzw. werden, **dadurch gekennzeichnet, dass** die Abdeckung (3) zur Beaufschlagung der Faserverbundstruktur (1) mit dem von ihrem zentralen Bereich (Z) in Richtung ihrer Ränder abnehmenden Druckgradienten in einem die Faserverbundstruktur (1) umfangsseitig umgebenden Bereich unter einem Abstand (A) von der Unterlage (2) gehalten wird, welcher größergleich der Dicke (D) der zumindest teilweise imprägnierten Faserverbundstruktur (1) beträgt, indem die Abdeckung (3) und die Unterlage (2) mittels wenigstens eines unter Druckbelastung im Wesentlichen starren, die zumindest teilweise imprägnierte Faserverbundstruktur (1) umgebenden Umfangsauflagers (5) auf Abstand (A) gehalten werden, wobei der Randbereich der zumindest teilweise imprägnierten Faserverbundstruktur (1) mit einem geringeren Druck beaufschlagt wird als deren zentraler Bereich, weil die Biegung der elastisch nachgiebig verformbaren Abdeckung bzw. der Unterlage dort geringer ist als die maximale Durchbiegung im zentralen Bereich der Faserverbundstruktur.

2. Verfahren nach Anspruch 1, **dadurch gekennzeichnet, dass** die zumindest teilweise imprägnierte Faserverbundstruktur (1) anlässlich des Verpressens, insbesondere im Wesentlichen zyklisch, druckentlastet wird, wonach sie jeweils wieder mit dem Druckgradienten beaufschlagt wird.

3. Verfahren nach Anspruch 1 oder 2, **dadurch gekennzeichnet, dass** die zumindest teilweise imprägnierte Faserverbundstruktur (1) ferner
- mit einem über ihre Flächenerstreckung im Wesentlichen konstanten Druck und/oder
- mit einem von ihrem zentralen Bereich (Z) in Richtung ihrer Ränder zunehmenden Druckgradienten beaufschlagt
wird, wobei sie insbesondere anfänglich mit dem von ihrem zentralen Bereich (Z) in Richtung ihrer Ränder abnehmenden Druckgradienten beaufschlagt wird.

4. Verfahren nach einem der Ansprüche 1 bis 3, **dadurch gekennzeichnet, dass** die Abdeckung (3) zur Beaufschlagung der zumindest teilweise imprägnierten Faserverbundstruktur (1)
- mit einem über ihre Flächenerstreckung im Wesentlichen konstanten Druck und/oder
- mit einem von ihrem zentralen Bereich (Z) in Richtung ihrer Ränder zunehmenden Druckgradienten
ferner in einem die Faserverbundstruktur (1) umfangsseitig umgebenden Bereich unter einem Abstand von der Unterlage (2) gehalten wird, welcher
- etwa der Dicke (D) der zumindest teilweise imprägnierten Faserverbundstruktur (1) entspricht; und/oder
- kleiner der Dicke (D) der zumindest teilweise imprägnierten Faserverbundstruktur (1) beträgt, wobei die Abdeckung (3) und die Unterlage (2) derart gegeneinander angepresst werden, dass die Unterlage (2) und/oder die Abdeckung (3) unter elastischer Biegung gegen die Faserverbundstruktur (1) angepresst wird bzw. werden.

5. Verfahren nach Anspruch 4, **dadurch gekennzeichnet, dass** das unter Druckbelastung im Wesentlichen starre Umfangsauflager (5), mittels dessen die Abdeckung (3) und die Unterlage (2) auf Abstand (A) gehalten werden, höhenverstellt und/oder durch ein anderes Umfangsauflager mit verschiedener Höhe ausgetauscht wird.

6. Verfahren nach einem der Ansprüche 1 bis 5, **dadurch gekennzeichnet, dass** die Erstreckungsflächen der Unterlage (2) und der Abdeckung (3) größer gewählt werden als die Erstreckungsfläche der zwischen diese eingebrachten, zumindest teilweise imprägnierten Faserverbundstruktur (1), wobei die Abdeckung (3) unter seitlichem Umfangsabstand von der Faserverbundstruktur (1), insbesondere mittels des Umfangsauflagers (5), zumindest zeitweise unter dem Abstand (A) größergleich der Dicke (D) der zumindest teilweise imprägnierten Faserverbundstruktur (1) gehalten wird.

7. Verfahren nach einem der Ansprüche 1 bis 6, **dadurch gekennzeichnet, dass** die Abdeckung (3) umfangsseitig, insbesondere an dem Umfangsauflager (5), gegen die Unterlage (2) abgedichtet und
- der die zumindest teilweise imprägnierte Faserverbundstruktur (1) aufnehmende Zwischenraum zwischen der Unterlage (2) und der Abdeckung (3) evakuiert wird; und/oder
- die zwischen der Unterlage (2) und der hiergegen abgedichteten Abdeckung (3) angeordnete, zumindest teilweise imprägnierte Faserverbundstruktur (1), insbesondere in einer Druckkammer, mit äußerem Fluiddruck beaufschlagt wird,
um die Faserverbundstruktur (1) unter elastischer Biegung der Unterlage (2) und/oder der Abdeckung (3) zu verpressen.

8. Verfahren nach einem der Ansprüche 1 bis 7, **dadurch gekennzeichnet, dass** die zwischen der Unterlage (2) und der Abdeckung (3) angeordnete, zumindest teilweise imprägnierte Faserverbundstruktur (1) dadurch verpresst wird, indem die Abdeckung (3) und die Unterlage (2) mittels eines Presswerkzeugs aufeinander zu bewegt werden.

9. Verfahren nach einem der Ansprüche 1 bis 8, **dadurch gekennzeichnet, dass** die zumindest teilweise imprägnierte Faserverbundstruktur (1) mittels elektromagnetischer Strahlung (4), insbesondere im Infrarot- oder im Mikrowellenspektrum, zumindest
- bis in den Bereich der Plastifizierungstemperatur des thermoplastischen und/oder thermoelastischen Matrixpolymers; oder
- bis in den Bereich der Aushärtungstemperatur des Harzes
erwärmt wird.

10. Verfahren nach Anspruch 9, **dadurch gekennzeichnet, dass** die zumindest teilweise imprägnierte Faserverbundstruktur (1)
- auf einer für die zu ihrer Erwärmung eingesetzten elektromagnetischen Strahlung (4) durchlässigen Unterlage (2) angeordnet wird; und/oder
- unter einer für die zu ihrer Erwärmung eingesetzten elektromagnetischen Strahlung (4) durchlässigen Abdeckung (3) angeordnet wird,
wobei die zumindest teilweise imprägnierte Faserverbundstruktur (1) anlässlich ihrer Erwärmung durch die Unterlage (2) und/oder durch die Abdeckung (3) hindurch von außen mit elektromagnetischer Strahlung (4) bestrahlt wird.

11. Verfahren nach einem der Ansprüche 1 bis 10, **dadurch gekennzeichnet, dass** die Fasern der Faserverbundstruktur (1)
- mit dem wenigstens einen thermoplastischen und/oder thermoelastischen Matrixpolymer; oder
- mit dem wenigstens einen zu dem Matrixpolymer aushärtbaren Harz
vorimprägniert werden und die imprägnierte Faserverbundstruktur (1) sodann konsolidiert wird.

12. Verfahren nach einem der Ansprüche 1 bis 11, **dadurch gekennzeichnet, dass** die Fasern der Faserverbundstruktur (1)
- mit dem wenigstens einen thermoplastischen und/oder thermoelastischen Matrixpolymer; oder
- mit dem wenigstens einen zu dem Matrixpolymer aushärtbaren Harz
imprägniert und zugleich konsolidiert werden.

13. Verfahren nach einem der Ansprüche 1 bis 12, **dadurch gekennzeichnet, dass** der zumindest teilweise imprägnierten Faserverbundstruktur (1) anlässlich der Konsolidierung eine Oberflächenkontur und/oder -struktur verliehen wird, indem die Unterlage (2) und/oder die Abdeckung (3) mit einer zu der gewünschten Oberflächenkontur und/oder -struktur komplementären Oberflächenkontur und/oder -struktur versehen wird.

14. Verfahren nach einem der Ansprüche 1 bis 13, **dadurch gekennzeichnet, dass** die Temperatur der zumindest teilweise imprägnierten Faserverbundstruktur (1) während ihrer Erwärmung, insbesondere berührungsfrei, gemessen wird, wobei insbesondere die zugeführte Wärmeenergie in Abhängigkeit der gewünschten Temperatur gesteuert wird.

15. Vorrichtung zur Durchführung eines Verfahrens nach einem der vorangehenden Ansprüche, mit
- einem zur Aufnahme einer zumindest teilweise imprägnierten Faserverbundstruktur (1) geeigneten Konsolidierungswerkzeug mit einer Unterlage (2) und einer Abdeckung (3), zwischen welche die Faserverbundstruktur (1) einbring- und ausbringbar ist, wobei die Unterlage (2) und/oder die Abdeckung (3) des Konsolidierungswerkzeugs elastisch nachgiebig verformbar ist bzw. sind;
- einem dem Konsolidierungswerkzeug (2, 3, 5) zugeordneten Druckerzeuger, um eine in dem Zwischenraum zwischen der Unterlage (2) und der Abdeckung (3) angeordnete, zumindest teilweise imprägnierte Faserverbundstruktur (1) mit Druck zu beaufschlagen; und
- einer dem Konsolidierungswerkzeug (2, 3, 5) zugeordneten Heizeinrichtung,
**dadurch gekennzeichnet, dass** ferner wenigstens ein im Umfangsbereich zwischen der Unterlage (2) und der Abdeckung (3) angeordnetes Umfangsauflager (5) vorgesehen ist, welches die zumindest teilweise imprägnierte Faserverbundstruktur umgibt und die Unterlage (2) und die Abdeckung (3) auf Abstand hält und unter Druckbelastung im Wesentlichen starr ausgebildet ist, wobei die Unterlage (2) und/oder die Abdeckung (3) derart elastisch nachgiebig verformbar ist bzw. sind, dass sie sich in ihrem zentralen Bereich in Richtung der Abdeckung (3) bzw. in Richtung der Unterlage (2) elastisch verbiegt bzw. verbiegen, wenn die in dem Zwischenraum zwischen der Unterlage (2) und der Abdeckung (3) angeordnete, zumindest teilweise imprägnierte Faserverbundstruktur (1) mit Druck beaufschlagt wird, wobei der Randbereich der zumindest teilweise imprägnierten Faserverbundstruktur (1) mit einem geringeren Druck beaufschlagt wird als deren zentraler Bereich, weil die Biegung der elastisch nachgiebig verformbaren Abdeckung bzw. der Unterlage dort geringer ist als die maximale Durchbiegung im zentralen Bereich der Faserverbundstruktur.

16. Vorrichtung nach Anspruch 15, **dadurch gekennzeichnet, dass** das unter Druckbelastung im Wesentlichen starre Umfangsauflager (5) höhenverstellbar und/oder austauschbar ist.

17. Vorrichtung nach Anspruch 15 oder 16, **dadurch gekennzeichnet, dass** das Umfangsauflager (5) des Konsolidierungswerkzeugs (2, 3, 5) mit Dichteinrichtungen versehen ist, um die Abdeckung (3) gegen die Unterlage (2) abzudichten.

18. Vorrichtung nach einem der Ansprüche 15 bis 17, **dadurch gekennzeichnet, dass**
- der Druckerzeuger eine mit dem Zwischenraum zwischen der Unterlage (2) und der Abdeckung (3) des Konsolidierungswerkzeugs in Verbindung stehende Saugpumpe, eine das Konsolidierungswerkzeug aufnehmende Drucckammer oder eine mit der Unterlage (2) und der Abdeckung (3) zusammenwirkende Presse; und/oder
- die Heizeinrichtung eine elektromagnetische Strahlungsquelle, insbesondere in Form einer Infrarot- oder einer Mikrowellenstrahlungsquelle,
umfasst.

## Claims

1. Method for consolidating fibre composite structures (1) comprising at least one matrix polymer, in that
- the fibre composite structure (1), which has been at least partially impregnated with at least one thermoplastic and/or thermoelastic matrix polymer, is heated at least to the region of the plasticization temperature of the matrix polymer and compressed under the action of pressure; or
- the fibre composite structure (1), which has been at least partially impregnated with at least one resin which can be cured to form the matrix polymer, is heated to the region of the curing temperature of the resin and compressed under the action of pressure,
wherein, during the compressing, the at least partially impregnated fibre composite structure (1) is subjected at least temporarily to a pressure gradient which decreases from its central region (Z) towards its edges in that the at least partially impregnated fibre composite structure (1) is arranged between an underlayer (2) and a covering (3), of which the underlayer (2) and/or the covering (3) can be elastically flexibly deformed, and the covering (3) and the underlayer (2) are pressed against one another in such a way that the underlayer (2) and/or the covering (3) are/is pressed against the fibre composite structure (1) with elastic bending, **characterized in that**, for the purpose of subjecting the fibre composite structure (1) to the pressure gradient which decreases from its central region (Z) towards its edges, in a region surrounding the periphery of the fibre composite structure (1) the covering (3) is kept at a distance (A) from the underlayer (2) that is greater than or equal to the thickness (D) of the at least partially impregnated fibre composite structure (1), **in that** the covering (3) and the underlayer (2) are kept at a distance (A) by means of at least one peripheral support (5) which is substantially rigid under compressive load and surrounds the at least partially impregnated fibre composite structure (1), wherein the edge region of the at least partially impregnated fibre composite structure (1) is subjected to a lower pressure than the central region thereof, because the bending of the elastically flexibly deformable covering and/or the underlayer is smaller there than the maximum sag in the central region of the fibre composite structure.

2. Method according to Claim 1, **characterized in that**, during the compressing, the at least partially impregnated fibre composite structure (1) is relieved of pressure, in particular in a substantially cyclic manner, after which in each case it is subjected to the pressure gradient again.

3. Method according to Claim 1 or 2, **characterized in that** the at least partially impregnated fibre composite structure (1) is also subjected to
- a pressure which is substantially constant over its area extent and/or
- a pressure gradient which increases from its central region (Z) towards its edges,
wherein said fibre composite structure is subjected, in particular initially, to the pressure gradient which decreases from its central region (Z) towards its edges.

4. Method according to one of Claims 1 to 3, **characterized in that**, for the purpose of subjecting the at least partially impregnated fibre composite structure (1)
- to a pressure which is substantially constant over its area extent and/or
- to a pressure gradient which increases from its central region (Z) towards its edges,
in a region surrounding the periphery of the fibre composite structure (1) the covering (3) is also kept at a distance from the underlayer (2) that
- corresponds approximately to the thickness (D) of the at least partially impregnated fibre composite structure (1); and/or
- is smaller than the thickness (D) of the at least partially impregnated fibre composite structure (1), wherein the covering (3) and the underlayer (2) are pressed against one another in such a way that the underlayer (2) and/or the covering (3) are/is pressed against the fibre composite structure (1) with elastic bending.

5. Method according to Claim 4, **characterized in that** the peripheral support (5), which is substantially rigid under compressive load and by means of which the covering (3) and the underlayer (2) are kept at a distance (A), is adjusted in terms of height and/or exchanged for another peripheral support with a different height.

6. Method according to one of Claims 1 to 5, **characterized in that** the areas of extent of the underlayer (2) and the covering (3) are selected to be larger than the area of extent of the at least partially impregnated fibre composite structure (1) introduced therebetween, wherein the covering (3) is kept at a lateral peripheral distance from the fibre composite structure (1), in particular by means of the peripheral support (5), at least temporarily at the distance (A) which is greater than or equal to the thickness (D) of the at least partially impregnated fibre composite structure (1) .

7. Method according to one of Claims 1 to 6, **characterized in that** the covering (3) is sealed at the periphery, in particular at the peripheral support (5), against the underlayer (2) and
- the intermediate space between the underlayer (2) and the covering (3) that receives the at least partially impregnated fibre composite structure (1) is evacuated; and/or
- the at least partially impregnated fibre composite structure (1) arranged between the underlayer (2) and the covering (3) sealed against said underlayer is subjected to external fluid pressure, in particular in a pressure chamber,
in order to compress the fibre composite structure (1) with elastic bending of the underlayer (2) and/or the covering (3).

8. Method according to one of Claims 1 to 7, **characterized in that** the at least partially impregnated fibre composite structure (1) arranged between the underlayer (2) and the covering (3) is compressed **in that** the covering (3) and the underlayer (2) are moved towards one another by means of a pressing tool.

9. Method according to one of Claims 1 to 8, **characterized in that** the at least partially impregnated fibre composite structure (1) is heated by means of electromagnetic radiation (4), in particular in the infrared or microwave spectrum, at least
- to the region of the plasticization temperature of the thermoplastic and/or thermoelastic matrix polymer; or
- to the region of the curing temperature of the resin.

10. Method according to Claim 9, **characterized in that** the at least partially impregnated fibre composite structure (1)
- is arranged on an underlayer (2) which is permeable to the electromagnetic radiation (4) used to heat said fibre composite structure;
and/or
- is arranged under a covering (3) which is permeable to the electromagnetic radiation (4) used to heat said fibre composite structure,
wherein, during the heating of the at least partially impregnated fibre composite structure (1), it is irradiated with electromagnetic radiation (4) from the outside through the underlayer (2) and/or through the covering (3).

11. Method according to one of Claims 1 to 10, **characterized in that** the fibres of the fibre composite structure (1) are pre-impregnated
- with the at least one thermoplastic and/or thermoelastic matrix polymer; or
- with the at least one resin which can be cured to form the matrix polymer,
and the impregnated fibre composite structure (1) is then consolidated.

12. Method according to one of Claims 1 to 11, **characterized in that** the fibres of the fibre composite structure (1) are impregnated
- with the at least one thermoplastic and/or thermoelastic matrix polymer; or
- with the at least one resin which can be cured to form the matrix polymer,
and are simultaneously consolidated.

13. Method according to one of Claims 1 to 12, **characterized in that**, during the consolidation, the at least partially impregnated fibre composite structure (1) is given a surface contour and/or surface structure **in that** the underlayer (2) and/or the covering (3) is provided with a surface contour and/or surface structure which complements the desired surface contour and/or surface structure.

14. Method according to one of Claims 1 to 13, **characterized in that** the temperature of the at least partially impregnated fibre composite structure (1) is measured, in particular contactlessly, while it is being heated, wherein particularly the heat energy supplied is controlled in dependence on the desired temperature.

15. Apparatus for carrying out a method according to one of the preceding claims, having
- a consolidation tool which is suitable for receiving an at least partially impregnated fibre composite structure (1) and has an underlayer (2) and a covering (3), between which the fibre composite structure (1) can be introduced and from between which it can be removed, wherein the underlayer (2) and/or the covering (3) of the consolidation tool can be elastically flexibly deformed;
- a pressure generator assigned to the consolidation tool (2, 3, 5), in order to subject an at least partially impregnated fibre composite structure (1) arranged in the intermediate space between the underlayer (2) and the covering (3) to pressure; and
- a heating device assigned to the consolidation tool (2, 3, 5),
**characterized in that** at least one peripheral support (5) is also provided which is arranged in the peripheral region between the underlayer (2) and the covering (3), surrounds the at least partially impregnated fibre composite structure, keeps the underlayer (2) and the covering (3) at a distance and has a substantially rigid form under compressive load, wherein the underlayer (2) and/or the covering (3) can be elastically flexibly deformed in such a way that they/it elastically bend(s) in their central region towards the covering (3) and towards the underlayer (2), respectively, when the at least partially impregnated fibre composite structure (1) arranged in the intermediate space between the underlayer (2) and the covering (3) is subjected to pressure, wherein the edge region of the at least partially impregnated fibre composite structure (1) is subjected to a lower pressure than the central region thereof, because the bending of the elastically flexibly deformable covering and/or the underlayer is smaller there than the maximum sag in the central region of the fibre composite structure.

16. Apparatus according to Claim 15, **characterized in that** the peripheral support (5), which is substantially rigid under compressive load, can be adjusted in terms of height and/or exchanged.

17. Apparatus according to Claim 15 or 16, **characterized in that** the peripheral support (5) of the consolidation tool (2, 3, 5) is provided with sealing devices, in order to seal the covering (3) against the underlayer (2).

18. Apparatus according to one of Claims 15 to 17, **characterized in that**
- the pressure generator comprises a suction pump connected to the intermediate space between the underlayer (2) and the covering (3) of the consolidation tool, a pressure chamber which receives the consolidation tool or a press which interacts with the underlayer (2) and the covering (3); and/or
- the heating device comprises an electromagnetic radiation source, in particular in the form of an infrared or microwave radiation source.

## Revendications

1. Procédé de consolidation de structures composites en fibres (1) avec au moins un polymère à matrice, dans lequel :
- la structure composite en fibres (1) au moins en partie imprégnée avec au moins un polymère à matrice thermoplastique et/ou thermoélastique est réchauffée au moins jusque dans la zone de la température de plastification du polymère à matrice et est comprimée sous l'action de la pression ; ou
- la structure composite en fibres (1) au moins en partie imprégnée avec au moins une résine pouvant durcir pour former le polymère à matrice est réchauffée jusque dans la zone de la température de durcissement de la résine et est comprimée sous l'action de la pression ;
la structure composite en fibres (1) au moins en partie imprégnée est chargée, lors de la compression, au moins en partie avec un gradient de pression diminuant depuis sa zone centrale (Z) en direction de ses bords du fait que la structure composite en fibres (1) au moins en partie imprégnée est disposée entre une base (2) et un couvercle (3), parmi lesquels la base (2) et/ou le couvercle (3) peut et/ou peuvent être déformés de façon souple et élastique et le couvercle (3) et la base (2) étant comprimés de telle sorte l'un contre l'autre que la base (2) et/ou le couvercle (3) sont comprimés contre la structure composite en fibres (1) par flexion élastique ;
**caractérisé en ce que** le couvercle (3) est maintenu à une distance (A) de la base (2) pour le chargement de la structure composite en fibres (1) avec le gradient de pression diminuant depuis sa zone centrale (Z) en direction de ses bords, dans une zone entourant sur le côté périphérique la structure composite en fibres (1), ladite distance étant de même grandeur que l'épaisseur (D) de la structure composite en fibres (1) au moins en partie imprégnée, le couvercle (3) et la base (2) étant maintenus à une distance (A) à l'aide d'au moins un support périphérique (5) pour l'essentiel rigide sous charge de pression entourant la structure composite en fibres (1) au moins en partie imprégnée, la zone de bordure de la structure composite en fibres (1) au moins en partie imprégnée étant chargée avec une pression davantage réduite que sa zone centrale, parce que la flexion du couvercle et/ou de la base déformable de façon souple et élastique y est plus réduite que la flèche maximale dans la zone centrale de la structure composite en fibres.

2. Procédé selon la revendication 1, **caractérisé en ce que** la structure composite en fibres (1) au moins en partie imprégnée est chargée en pression lors de la compression, notamment pour l'essentiel cycliquement, à la suite de quoi elle est respectivement de nouveau chargée avec le gradient de pression.

3. Procédé selon la revendication 1 ou 2, **caractérisé en ce que** la structure composite en fibres (1) au moins en partie imprégnée est en outre chargée :
- avec une pression pour l'essentiel constante sur l'ensemble de l'extension de sa surface ; et/ou
- avec un gradient de pression croissant depuis sa zone centrale (Z) en direction de ses bords, ladite structure étant notamment chargée au début avec le gradient de pression diminuant depuis sa zone centrale (Z) en direction de ses bords.

4. Procédé selon l'une quelconque des revendications 1 à 3, **caractérisé en ce que** le couvercle (3) est maintenu à une certaine distance de la base (2) pour le chargement de la structure composite en fibres (1) au moins en partie imprégnée :
- avec une pression pour l'essentiel constante sur l'ensemble de l'extension de sa surface ; et/ou
- avec un gradient de pression augmentant depuis sa zone centrale (Z) en direction de ses bords en outre dans une zone entourant la structure composite en fibres (1) sur le côté périphérique, ladite distance :
- correspondant approximativement à l'épaisseur (D) de la structure composite en fibres (1) au moins en partie imprégnée ; et/ou
- étant inférieure à l'épaisseur (D) de la structure composite en fibres (1) au moins en partie imprégnée, le couvercle (3) et la base (2) étant comprimés de telle sorte l'un contre l'autre que la base (2) et/ou le couvercle (3) est et/ou sont comprimés contre la structure composite en fibres (1) par flexion élastique.

5. Procédé selon la revendication 4, **caractérisé en ce que** le support périphérique (5) pour l'essentiel rigide sous charge de pression à l'aide duquel le couvercle (3) et la base (2) sont maintenus à une distance (A) peut être réglé en hauteur et/ou être remplacé par un autre support périphérique de hauteur différente.

6. Procédé selon l'une quelconque des revendications 1 à 5, **caractérisé en ce que** les surfaces d'extension de la base (2) et du couvercle (3) sont choisies de façon à être plus importantes que la surface d'extension de la structure composite en fibres (1) au moins en partie imprégnée amenée entre elles, le couvercle (3) étant maintenu à une certaine distance périphérique latérale de la structure composite en fibres (1), notamment à l'aide du support périphérique (5), au moins en partie à la distance (A) de même grandeur que l'épaisseur (D) de la structure composite en fibres (1) au moins en partie imprégnée.

7. Procédé selon l'une quelconque des revendications 1 à 6, **caractérisé en ce que** le couvercle (3) est étanchéifié par rapport à la base (2), sur le côté périphérique, notamment au niveau du support périphérique (5) ; et
- l'espace intermédiaire recevant la structure composite en fibres (1) au moins en partie imprégnée est évacué entre la base (2) et le couvercle (3) ; et/ou
- la structure composite en fibres (1) au moins en partie imprégnée disposée entre la base (2) et le couvercle (3) étanchéifié par rapport à elle est chargée en pression fluide externe, notamment dans une chambre de pression ;
pour comprimer la structure composite en fibres (1) par flexion élastique de la base (2) et/ou du couvercle (3).

8. Procédé selon l'une quelconque des revendications 1 à 7, **caractérisé en ce que** la structure composite en fibres (1) au moins en partie imprégnée disposée entre la base (2) et le couvercle (3) est comprimée en déplaçant l'un sur l'autre le couvercle (3) et la base (2) à l'aide d'un outil de compression.

9. Procédé selon l'une quelconque des revendications 1 à 8, **caractérisé en ce que** la structure composite en fibres (1) au moins en partie imprégnée est réchauffée par rayonnement électromagnétique (4), notamment dans le spectre de l'infrarouge ou des microondes, au moins :
- jusque dans la zone de la température de plastification du polymère à matrice thermoplastique et/ou thermoélastique ; ou
- jusque dans la zone de la température de durcissement de la résine.

10. Procédé selon la revendication 9, **caractérisé en ce que** la structure composite en fibres (1) au moins en partie imprégnée est disposée :
- sur une base (2) perméable au rayonnement électromagnétique (4) utilisé pour son réchauffement ; et/ou
- sous un couvercle (3) perméable au rayonnement électromagnétique (4) utilisé pour son réchauffement ;
la structure composite en fibres (1) au moins en partie imprégnée étant irradiée au rayonnement électromagnétique (4) depuis l'extérieur à travers la base (2) et/ou le couvercle (3) lors de son réchauffement.

11. Procédé selon l'une quelconque des revendications 1 à 10, **caractérisé en ce que** les fibres de la structure composite en fibres (1) sont pré-imprégnées :
- avec l'au moins un polymère à matrice thermoplastique et/ou thermoélastique ; ou
- avec l'au moins une résine pouvant être durcie pour former le polymère à matrice ; consolidant ainsi la structure composite en fibres (1) imprégnée.

12. Procédé selon l'une quelconque des revendications 1 à 11, **caractérisé en ce que** les fibres de la structure composite en fibres (1) sont imprégnées :
- avec l'au moins un polymère à matrice thermoplastique et/ou thermoélastique ; ou
- avec l'au moins une résine pouvant durcir pour former le polymère à matrice ;
la consolidant ainsi par la même occasion.

13. Procédé selon l'une quelconque des revendications 1 à 12, **caractérisé en ce qu'**un contour de surface et/ou une structure de surface sont impartis à la structure composite en fibres (1) au moins en partie imprégnée lors de la consolidation **en ce que** la base (2) et/ou le couvercle (3) est pourvu d'un contour de surface et/ou d'une structure de surface complémentaires au contour de surface et/ou à la structure de surface souhaités.

14. Procédé selon l'une quelconque des revendications 1 à 13, **caractérisé en ce que** la température de la structure composite en fibres (1) au moins en partie imprégnée est commandée pendant son réchauffement, notamment mesurée sans contact, l'énergie thermique amenée étant notamment commandée en fonction de la température souhaitée.

15. Dispositif servant à la mise en oeuvre d'un procédé selon l'une quelconque des revendications précédentes, avec :
- un outil de consolidation adapté à la réception d'une structure composite en fibres (1) au moins en partie imprégnée, avec une base (2) et un couvercle (3) entre lesquels la structure composite en fibres (1) peut être amenée et retirée, la base (2) et/ou le couvercle (3) de l'outil de consolidation pouvant être déformé et/ou déformés de façon souple et élastique ;
- un compresseur associé à l'outil de consolidation (2, 3, 5), pour charger en pression une structure composite en fibres (1) au moins en partie imprégnée disposée dans l'espace intermédiaire entre la base (2) et le couvercle (3) ; et
- un dispositif de chauffage associé à l'outil de consolidation (2, 3, 5) ;
**caractérisé en ce qu'**en outre au moins un support périphérique (5) disposé dans la zone périphérique entre la base (2) et le couvercle (3) est prévu, ledit support entourant la structure composite en fibres au moins en partie imprégnée et maintenant la base (2) et le couvercle (3] à distance et étant réalisé de façon pour l'essentiel rigide sous charge de pression, la base (2) et/ou le couvercle (3) étant déformable et/ou déformables de façon souple et élastique de façon à pouvoir le et/ou les arquer de façon élastique dans leur zone centrale en direction du couvercle (3) et/ou en direction de la base (2) lorsque la structure composite en fibres (1) au moins en partie imprégnée disposée dans l'espace intermédiaire entre la base (2) et le couvercle (3) est chargée en pression, la zone de bordure de la structure composite en fibres (1) au moins en partie imprégnée étant chargée avec une pression plus réduite au niveau de sa zone centrale parce que la flexion du couvercle et/ou de la base déformable de façon souple et élastique y est plus réduite que la flèche maximale dans la zone centrale de la structure composite en fibres.

16. Dispositif selon la revendication 15, **caractérisé en ce que** le support périphérique (5) pour l'essentiel rigide sous charge de pression peut être réglé en hauteur et/ou échangé.

17. Dispositif selon la revendication 15 ou 16, **caractérisé en ce que** le support périphérique (5) de l'outil de consolidation (2, 3, 5) est pourvu de dispositifs d'étanchéité servant à étanchéifier le couvercle (3) par rapport à la base (2).

18. Dispositif selon l'une quelconque des revendications 15 à 17, **caractérisé en ce que** :
- le compresseur comprend une pompe aspirante reliée à l'espace intermédiaire entre la base (2) et le couvercle (3) de l'outil de consolidation, une chambre de pression recevant l'outil de consolidation ou une presse interagissant avec la base (2) et le couvercle (3) ; et/ou
- le dispositif de chauffage comprend une source de rayonnement électromagnétique, notamment sous la forme d'une source de rayonnement infrarouge ou de micro-ondes.
